# EUROPÄISCHE PATENTANMELDUNG

(11) **EP 3 193 035 A1**
(43) Veröffentlichungstag der Anmeldung: **19.07.2017**
(21) Anmeldenummer: 17151257.7
(22) Anmeldetag: 12.01.2017
(51) Int. Cl.: F16D 55/2265

(54) **SCHEIBENBREMSE FÜR EIN NUTZFAHRZEUG**

(30) Priorität: 13.01.2016 DE 102016100458
(71) Anmelder: KNORR-BREMSE Systeme für Nutzfahrzeuge GmbH, 80809 München (DE)
(72) Erfinder: SCHÖFBERGER, Tobias, 84048 Mainburg (DE); FRICKE, Jens, 94474 Vilshofen (DE)

(57) **Zusammenfassung**

Eine Scheibenbremse für ein Nutzfahrzeug, mit einem eine Bremsscheibe überspannenden Bremssattel (1), der in mindestens einer Gleitlagerung (3), mit einem an einem ortsfesten Bremsträger befestigten Führungsholm (4), bezogen auf die Bremsscheibe, axial verschiebbar gelagert ist, wobei der Führungsholm (4) in zumindest einer Gleitbuchse (5) geführt ist, die in einer Lagerbohrung (2) des Bremssattels (1) verschiebegesichert gehalten ist, ist so ausgebildet, dass in der Gleitlagerung (3) eine den Führungsholm (4) umfänglich umschließende, radial wirkende und als Aktuator ausgebildete Spanneinrichtung (6) angeordnet ist, mit der der Bremssattel (1) bei gelöster Bremse gegenüber dem Führungsholm (4) arretierbar ist.

## Beschreibung

Die Erfindung betrifft eine Scheibenbremse für ein Nutzfahrzeug nach dem Oberbegriff des Anspruchs 1.

Der auch als Schiebesattel bezeichnete Bremssattel einer gattungsgemäßen Scheibenbremse ist mittels mindestens eines Führungsholms an einem fahrzeugseitigen, also ortsfesten Bremsträger vorzugsweise durch Verschrauben befestigt.

Zur axialen Verschiebung des Bremssattels bei einer Bremsung, bei der mittels einer im Bremssattel angeordneten Zuspanneinrichtung Bremsbeläge gegen eine fahrzeugseitige Bremsscheibe gepresst werden, weist der Bremssattel mindestens eine Gleitbuchse auf, die verschiebesicher in einer Lagerbohrung des Bremssattels gehalten ist und die gemeinsam mit dem Führungsholm eine Gleitlagerung bildet.

Problematisch gestaltet sich die Lagerung des Bremssattels auf dem Führungsholm insofern, als nach einem Lösen der Bremse der Bremssattel in der axial verschobenen Zuspannstellung verbleibt, in der die Bremsbeläge, zumindest aber der reaktionsseitige Bremsbelag drucklos, jedoch schleifend an der Bremsscheibe anliegt.

Die sich daraus ergebenden Restschleifmomente führen zu einem erhöhten Kraftstoffverbrauch des Fahrzeuges ebenso wie zu einer Verringerung der Standzeit sowohl der Bremsscheibe wie auch der Bremsbeläge. Zwar erfolgt ein geringes Lösen der Bremsbeläge im Fahrbetrieb durch einen Taumelschlag der Bremsscheibe sowie durch Erschütterungen und Querbeschleunigungen bei Kurvenfahrten, dieses geringe Lösen ist jedoch nicht ausreichend, um das genannte Schleifen wirksam zu verhindern.

In der DE 199 46 677 A1 ist deshalb vorgeschlagen, im Bremssattel, d.h. in der Gleitlagerung eine Rückstelleinrichtung anzuordnen, mit der nach einem Lösen der Bremse der Bremssattel in eine Ausgangsstellung zurückführbar ist.

Allerdings ist mit dieser Rückstelleinrichtung keine Festsetzung des Bremssattels gegenüber dem Führungsholm in ungebremster Stellung der Scheibenbremse möglich. Durch die im Fahrbetrieb auftretenden Erschütterungen und insbesondere auch bei Kurvenfahrten kann sich deshalb der Bremssattel verschieben, so dass sich das vorgenannte Restschleifmoment einstellt, mit den sich daraus ergebenden Nachteilen.

Der Erfindung liegt die Aufgabe zugrunde, eine Scheibenbremse der gattungsgemäßen Art so weiterzuentwickeln, dass ihre Standzeit erhöht und ihre Betriebskosten dadurch gesenkt werden.

Diese Aufgabe wird durch eine Scheibenbremse mit den Merkmalen des Anspruchs 1 gelöst.

Gemäß der Erfindung wird nun der Bremssattel gegenüber dem Führungsholm bei Nichtfunktion der Scheibenbremse, also in ungebremster Stellung, so weit verspannt, dass die im Fahrbetrieb auftretenden Kräfte durch Kurvenfahrten oder Rüttelbeanspruchungen nicht ausreichen, um den Bremssattel in seiner Position zu verschieben.

Dabei soll die Spanneinrichtung den Bremssattel bei einem Bremsdruck von unter 0,5 bar verspannen und mit einer möglichst hohen Verschiebekraft, vorzugsweise ca. 1000 N festsetzen.

D.h., die Spanneinrichtung wird dann aktiviert, wenn ein Bremsdruck von < 0,5 bar an der Zuspanneinrichtung anliegt.

Die einen Aktuator bildende Spanneinrichtung kann auf verschiedene Art und Weise betrieben, d.h., gespannt werden. Beispielhaft sei hier eine hydraulische, pneumatische, elektrische als Elektromagnet oder mechanische Verspannung genannt, wozu entsprechende Krafterzeuger zum Einsatz kommen.

Nach einem weiteren Gedanken der Erfindung ist vorgesehen, dass nach einem Verspannen des Bremssattels auf dem Führungsholm der Bremssattel mitsamt seiner inneren Mechanik, also der Zuspanneinrichtung, geringfügig in Zuspannrichtung zur Bremsscheibe hin verschoben wird, vorzugsweise um 0,3 - 0,4 mm, wodurch der Bremssattel relativ zur Bremsscheibe zentriert wird.

Diese Minimalverschiebung kann mittels einer Feder oder eines Linearelementes erfolgen, wobei letzteres pneumatisch, mechanisch oder elektrisch antreibbar ist. Durch die Verschiebung ergibt sich eine ständige Neupositionierung des Bremssattels nach jedem Bremsvorgang, was gleichfalls zur Verbesserung des Betriebsverhaltens der Bremse beiträgt.

Bevorzugt fungiert weiterhin die Spanneinrichtung als Rückstelleinrichtung, mit der der Bremssattel nach einem Lösen der Bremse entgegen der Zuspannrichtung des reaktionsseitigen Bremsbelages zurückgestellt wird.

Hierbei kann die Spanneinrichtung in Korrespondenz stehen mit einer Feder, beispielsweise einer Tellerfeder, die zwischen der Spanneinrichtung und einer Gleitbuchse angeordnet ist, wobei die Feder beim bremsbedingten Verschieben des Bremssattels gespannt und nach Lösen der Bremse entspannt wird.

Auf eine solche Feder kann dann verzichtet werden, wenn, wie nach einem weiteren Gedanken der Erfindung vorgesehen, der aktionsseitige Bremsbelag mit Druckstücken der Zuspanneinrichtung verbunden ist und der reaktionsseitige Bremsbelag am Rücken des Bremssattels gehalten ist.

Ferner ist vorgesehen, die Spanneinrichtung sowie die Feder zwischen zwei Gleitbuchsen anzuordnen, die jeweils als sogenanntes DU-Lager ausgebildet sind und die verschiebegesichert in der Lagerbohrung gehalten sind.

Die Spanneinrichtung kann als Klemmring ausgebildet sein zu dessen axialer Verschiebebegrenzung die beiden Gleitbuchsen dienen, wobei der Abstand zwischen den beiden Gleitbuchsen größer ist als die Länge des Klemmringes, in dem beispielsweise ein insbesondere wendelförmig um den Führungsholm geschlungener Luftschlauch gehalten ist, der mit Luft derart beaufschlagbar ist, dass er im Sinne des genannten Spannens einerseits gegen den Führungsholm und andererseits gegen die Wandung des Klemmringes gepresst wird.

Wie erwähnt, können zur Aufbringung der Spannkraft auch elektrisch, beispielsweise als Elektromagnet ausgebildete, mechanische oder hydraulisch betätigbare Spannmittel Verwendung finden, bevorzugt gleichfalls in einem Klemmring gehalten.

Prinzipiell weist die gattungsgemäße Scheibenbremse mindestens eine Gleitlagerung mit einem Führungsholm auf. Überwiegend ist der Bremssattel mit zwei Gleitlagerungen am Bremsträger gehalten, wobei ein Gleitlager als Festlager mit geringem radialem Spiel und das andere als Loslager mit etwa größerem Spiel zum Ausgleich insbesondere von Toleranzen ausgebildet ist.

Die Ausgestaltung gemäß der Erfindung kann an einer der beiden Gleitlagerungen vorgesehen sein oder an beiden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Scheibenbremse nach dem Stand der Technik in einer teilweise geschnittenen Draufsicht
- Figur 2: eine Einzelheit der Scheibenbremse gemäß der Erfindung in einem schematischen Längsschnitt.

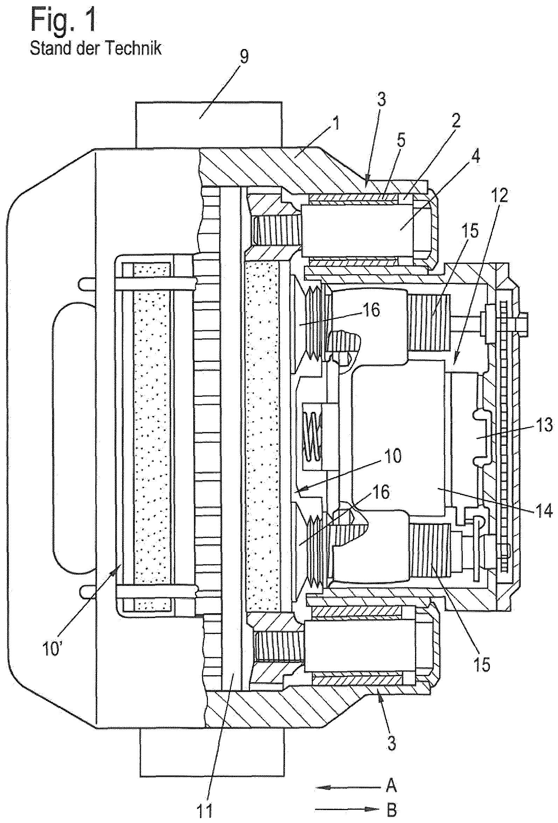

In der **Figur 1** ist eine Scheibenbremse nach dem Stand der Technik abgebildet, mit einem Bremssattel 1, der eine fahrzeugseitige Bremsscheibe 11 übergreift und in dem beidseitig der Bremsscheibe 11 zugeordnete Bremsbeläge 10, 10' angeordnet sind.

Dabei bildet der Bremsbelag 10 einen aktionsseitigen Bremsbelag, der bei einer Bremsung mittels einer Zuspanneinrichtung 12, die im Bremssattel 1 positioniert ist, gegen die Bremsscheibe 11 pressbar ist.

Durch dabei sich ergebende Reaktionskräfte wird der reaktionsseitige Bremsbelag 10' gleichfalls gegen die Bremsscheibe 11 gepresst. Die Zuspannrichtung ist mit einem Pfeil A und die Reaktionsrichtung mit einem Pfeil B gekennzeichnet.

Die Zuspanneinrichtung 12 weist einen schwenkbaren, pneumatisch oder elektromechanisch betätigbaren Bremshebel 13 auf, der bei Verschwenkung eine anliegende Brücke 14 in Richtung der Bremsscheibe 11 verschiebt und dabei in der Brücke 14 gelagerte Stellspindeln 15 und an diesen angeschlossene Druckstücke 16 gegen den Bremsbelag 10 presst.

Der Bremssattel 1 ist auf Führungsholmen 4, bezogen auf die Bremsscheibe 11, axial verschieblich gelagert, wobei die beiden parallel und abständig zueinander angeordneten Führungsholme 4 mit einem ortsfesten, d.h. am Fahrzeug befestigten Bremsträger 9 verschraubt sind.

Zur axialen Verschiebung des Bremssattels 1 sind Gleitlagerungen 3 vorgesehen, die jeweils aus dem Führungsholm 4 und mindestens einer Gleitbuchse 5 bestehen, die verschiebegesichert in einer Lagerbohrung 2 des Bremssattels 1 gehalten ist und in der der Führungsholm 4 geführt ist.

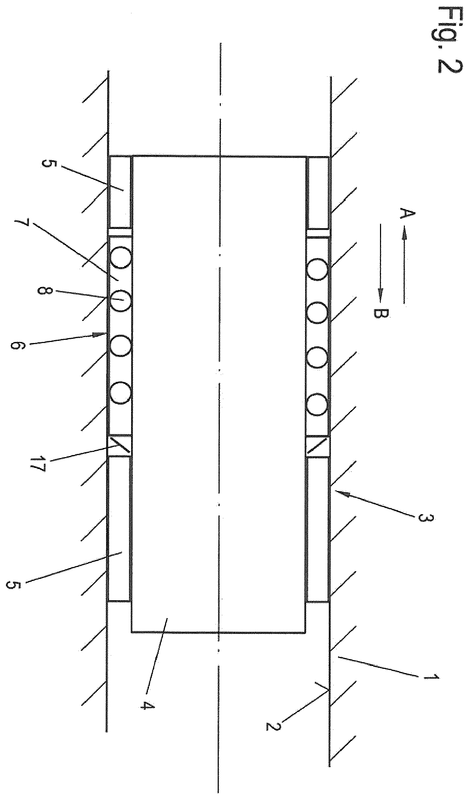

In der **Figur 2** ist schematisch eine Gleitlagerung 3 der Scheibenbremse dargestellt, mit zwei axial abständig zueinander angeordneten Gleitbuchsen 5, die vorzugsweise als DU-Lager ausgebildet sind und die, wie erwähnt, verschiebegesichert in der Lagerbohrung 2 des Bremssattels 1 gehalten sind.

Zwischen den beiden Gleitbuchsen 5 ist eine Spanneinrichtung 6 angeordnet, mittels der der Bremssattel 1 in ungebremster Stellung gegenüber dem Führungsholm 4 verspannt ist.

Im Beispiel weist die Spanneinrichtung 6 einen Klemmring 7 auf, in dem mindestens ein Spannelement 8 angeordnet ist, das in Funktion auf den Führungsholm 4 spannend einwirkt. Im Beispiel besteht das Spannelement 8 aus einem wendelförmig um den Führungsholm 4 geschlungenen Luftschlauch, der zum Verspannen mit Druckluft befüllbar ist und sich dabei einerseits an der inneren Mantelfläche des Klemmringes 7 und andererseits an der Außenfläche des Führungsholms 4 abstützt. Wie bereits erwähnt, soll die Klemmung des Führungsholms 4 dann erfolgen, wenn ein Bremsdruck von unter 0,5 bar anliegt, wobei die Klemmkraft einer Verschiebekraft von ca. 1000 N entspricht.

Die Spanneinrichtung 6 ist in Funktion überdies eine Rückstelleinrichtung, im Beispiel in Korrespondenz mit einem Federelement in Form einer Tellerfeder 17, die zwischen einer der Gleitbuchsen 5 und dem Klemmring 7 angeordnet ist.

Beim Bremsen, d.h. dem Anpressen des reaktionsseitigen Bremsbelages 10' wird der Bremssattel 1 in Reaktionsrichtung B verschoben, unter Mitnahme des Klemmrings 7, der dann an der in der Figur 2 linksseitig angeordneten Gleitbuchse 5 anliegt und gegen die zunächst entspannte Tellerfeder 17 gedrückt wird. Im weiteren Verlauf, d.h. bei weiterer Verschiebung des Bremssattels 1 wird die Tellerfeder 17 gespannt.

Nach einem Lösen der Bremse wird aufgrund der Entspannung der Tellerfeder 17 der Klemmring 7 gegen die linksseitige Gleitbuchse 5 gedrückt unter Mitnahme des Bremssattels 1. In dieser Stellung wird die Spanneinrichtung 6 im vorbeschriebenen Sinn gespannt.

Für eine Zentrierung des Bremssattels 1 gegenüber der Bremsscheibe 11 wird danach der Bremssattel 1 um ca. 0,3 - 0,4 mm in Richtung der Bremsscheibe 11, d.h. in Richtung A verschoben.

Bei einer Bremsung, bei der ein Bremsdruck > 0,5 bar ansteht, wird die Spanneinrichtung 6 entspannt, so dass der Bremssattel 1 relativ zum Führungsholm 4 verschiebbar ist.

### Bezugszeichenliste

- 1: Bremssattel
- 2: Lagerbohrung
- 3: Gleitlagerung
- 4: Führungsholm
- 5: Gleitbuchse
- 6: Spanneinrichtung
- 7: Klemmring
- 8: Spannelement
- 9: Bremsträger
- 10: Bremsbelag
- 10': Bremsbelag
- 11: Bremsscheibe
- 12: Zuspanneinrichtung
- 13: Bremshebel
- 14: Brücke
- 15: Stellspindel
- 16: Druckstück
- 17: Tellerfeder

## Patentansprüche

1. Scheibenbremse für ein Nutzfahrzeug, mit einem eine Bremsscheibe (11) überspannenden Bremssattel (1), der in mindestens einer Gleitlagerung (3), mit einem an einem ortsfesten Bremsträger (9) befestigten Führungsholm (4), bezogen auf die Bremsscheibe (11), axial verschiebbar gelagert ist, wobei der Führungsholm (4) in zumindest einer Gleitbuchse (5) geführt ist, die in einer Lagerbohrung (2) des Bremssattels (1) verschiebegesichert gehalten ist,
**dadurch gekennzeichnet, dass**
in der Gleitlagerung (3) eine den Führungsholm (4) umfänglich umschließende, radial wirkende und als Aktuator ausgebildete Spanneinrichtung (6) angeordnet ist, mit der der Bremssattel (1) bei gelöster Bremse gegenüber dem Führungsholm (4) arretiert ist.

2. Scheibenbremse nach Anspruch 1,
**dadurch gekennzeichnet, dass**
die Spanneinrichtung (6) pneumatisch, hydraulisch, elektrisch oder mechanisch betätigbare Spannelemente (8) aufweist.

3. Scheibenbremse nach Anspruch 1 oder 2,
**dadurch gekennzeichnet, dass**
das pneumatisch oder hydraulisch betätigbare Spannelement (8) aus einem wendelförmig um den Führungsholm (4) gewundenen Schlauch gebildet ist.

4. Scheibenbremse nach einem der vorhergehenden Ansprüche,
**dadurch gekennzeichnet, dass**
die Spanneinrichtung (6) zwischen zwei, axial hintereinander liegenden Gleitbuchsen (5) angeordnet ist.

5. Scheibenbremse nach einem der vorhergehenden Ansprüche,
**dadurch gekennzeichnet, dass**
die Spanneinrichtung (6) bei einem Bremsdruck ≤ 0,5 bar spannbar ist.

6. Scheibenbremse nach einem der vorhergehenden Ansprüche,
**dadurch gekennzeichnet, dass**
der auf den Führungsholm (4) wirkende Spanndruck der Spanneinrichtung (6) einer Verschiebekraft von ca. 1000 N entspricht.

7. Scheibenbremse nach einem der vorhergehenden Ansprüche,
**dadurch gekennzeichnet, dass**
zwischen der Spanneinrichtung (6) und einer Gleitbuchse (5) ein Federelement, vorzugsweise eine Tellerfeder (17) angeordnet ist, wobei die Spanneinrichtung (6) mit Spiel zu den beiden axial abständig zueinander angeordneten Gleitbuchsen (5) positioniert ist.

8. Scheibenbremse nach einem der vorhergehenden Ansprüche,
**dadurch gekennzeichnet, dass**
die Spanneinrichtung (6) einen Klemmring (7) aufweist, in dem das Spannelement (8) einliegt, das sich einerseits an der inneren Mantelfläche des Klemmrings (7) und andererseits am Führungsholm (4) abstützt.

9. Scheibenbremse nach einem der vorhergehenden Ansprüche,
**dadurch gekennzeichnet, dass**
der Bremssattel (1) in mit dem Führungsholm (4) verspannter Stellung in Richtung der Bremsscheibe (11) verschiebbar ist, vorzugsweise um 0,3 - 0,4 mm.

10. Scheibenbremse nach einem der vorhergehenden Ansprüche,
**dadurch gekennzeichnet, dass**
ein zuspannseitiger Bremsbelag (10) an mindestens einem Druckstück einer Zuspanneinrichtung (12) und ein reaktionsseitiger Bremsbelag (10') an dem der Zuspanneinrichtung (12) gegenüberliegenden Rücken des Bremssattels (1) befestigt sind.

11. Scheibenbremse nach einem der vorhergehenden Ansprüche,
**dadurch gekennzeichnet, dass**
zur Verschiebung des Bremssattels (1) bei Verspannung mit dem Führungsholm (4) mittels der Spanneinrichtung (6) eine Feder oder ein pneumatisch, mechanisch oder elektrisch antreibbares Linearelement vorgesehen ist.
